(19) Europäisches Patentamt

European Patent Office

Office européen des brevets

(11) Veröffentlichungsnummer: **0 456 652 B1**

(12) **EUROPÄISCHE PATENTSCHRIFT**

(45) Veröffentlichungstag der Patentschrift: **08.06.94**

(21) Anmeldenummer: **90901751.9**

(22) Anmeldetag: **24.01.90**

(86) Internationale Anmeldenummer:
**PCT/DE90/00043**

(87) Internationale Veröffentlichungsnummer:
**WO 90/08969 (09.08.90 90/19)**

(51) Int. Cl.⁵: **G02B 27/14**

(54) OPTISCHE FARBTEILER-ANORDNUNG.

(30) Priorität: **02.02.89 DE 3903019**

(43) Veröffentlichungstag der Anmeldung:
**21.11.91 Patentblatt 91/47**

(45) Bekanntmachung des Hinweises auf die
Patenterteilung:
**08.06.94 Patentblatt 94/23**

(84) Benannte Vertragsstaaten:
**CH DE FR GB IT LI**

(56) Entgegenhaltungen:
**EP-A- 0 174 778**
**DE-A- 1 597 209**
**US-A- 3 753 822**

**PATENT ABSTRACTS OF JAPAN, vol. 9, no.
127, (P-360)(1850), 31 May 1985 ; & JP-A-60 10
223**

**PATENT ABSTRACTS OF JAPAN, vo. 4, no.
78, (P-14), 6 May 1980 ; & JP-A-55 044 914**

(73) Patentinhaber: **Linotype-Hell Aktiengesellschaft**
**Postfach 56 60,**
**Mergenthaler Allee 55-75**
**D-65731 Eschborn(DE)**

(72) Erfinder: **SCHULZ-HENNIG, Jörg**
**Limmattalstr. 395**
**CH-8049 Zürich(CH)**

Rank Xerox (UK) Business Services
(3.10/3.09/3.3.3)

EP 0 456 652 B1

## Beschreibung

Die Erfindung bezieht sich auf das Gebiet der technischen Optik und betrifft eine optische Farbteiler-Anordnung in einem optoelektronischen Farb-Abtaster zur Erkennung bzw. zur Trennung von in einer Farbfläche abgetasteten Farben.

Ein solcher optoelektronischer Farb-Abtaster besteht im wesentlichen aus der optischen Farbteiler-Anordnung für die einzelnen Farbkanäle zur Zerlegung des von der abgetasteten Farbfläche reflektierten oder durchgelassenen Lichtes in mindestens zwei Farbanteile unterschiedlicher Spektralbereiche, in der Regel in drei spektrale Farbanteile "Rot","Grün" und "Blau", und aus optoelektronischen Wandlern, mit denen die spektralen Farbanteile in elektrische Farbsignale umgewandelt werden.

Zur spektralen Zerlegung des Lichtes werden vorwiegend dichroitische Spiegel verwendet, welche die Eigenschaften haben, Licht eines begrenzten Spektralbereiches zu reflektieren, also zu sperren, und Licht des restlichen Spektralbereiches durchzulassen. Um eine gute Farbselektivität der Farbteiler-Anordnung zu erreichen, müssen die Durchlaß- und Sperrbereiche der Filter-Kurven der dichroitischen Spiegel möglichst gut auf die voneinander zu trennenden Spektralbereiche des Lichtes abgestimmt sein.

Die spektralen Filter-Kurven der im Handel erhältlichen dichroitischen Spiegel weisen aber herstellungsbedingte Toleranzen der Filterflanken zwischen Durchlaß- und Sperrbereichen auf.

Um genau definierte Spektralbereiche für die Farbteiler-Anordnung zu schaffen, und die Farbselektivität durch Einengung der Spektralbereiche zu erhöhen, sind jedem Farbkanal der Farbteiler-Anordnung Korrekturmittel zugeordnet, mit denen sich die Flanken der Filter-Kurven der dichroitischen Spiegel korrigieren lassen. Als Korrekturmittel werden Gläser mit farbigen Zusätzen, sogenannte Farbglasfilter, oder kurzwelliges Licht absorbierende Gläser, sogenannte Anlaufgläser, verwendet.

Eine Korrektur bzw. ein Abgleich der Spektralbereiche der Farbteiler-Anordnung unter meßtechnischer Kontrolle wird nicht nur bei der Herstellung der Farbteiler-Anordnung erforderlich, sondern auch bei jedem Austausch eines dichroitischen Spiegels oder eines der optoelektronischen Wandler des Farb-Abtasters, da sich beim Auswechseln eines optoelektronischen Wandlers die spektrale Empfindlichkeitsverteilung des ganzen Farb-Abtasters ändern kann.

Die Praxis hat gezeigt, daß der spektrale Abgleich einer Farbteiler-Anordnung zeitaufwendig und auch kostenintensiv ist, da ein erheblicher Meßaufwand erforderlich ist und eine große Anzahl von Farbglasfiltern bzw. Anlaufgläsern mit unterschiedlichen Filter-Kurven bereitgehalten werden muß.

Ein weiterer Nachteil besteht darin, daß bei der Verwendung von Farbglasfiltern und Anlaufgläsern als Korrekturmittel hohe Lichtverluste durch Absorption in den Gläsern entstehen. Zum Ausgleich dieser Lichtverluste muß dann die Verstärkung der Farbsignale erhöht werden, wodurch der Rauschanteil in den Farbsignalen ansteigt und die Farbselektivität des Farb-Abtasters sinkt.

Der im Anspruch 1 angegebenen Erfindung liegt daher die Aufgabe zugrunde, eine Farbteiler-Anordnung anzugeben, bei der die genannten Nachteile vermieden werden und bei der sich zur Verbesserung der Farbselektivität definierte Spektralbereiche auf einfache Weise relativ genau einstellen und immer wieder genau reproduzieren lassen.

Die Erfindung wird im folgenden anhand der Figuren 1 - 6 näher erläutert. Es zeigen:

Fig. 1    ein erstes Ausführungsbeispiel für eine optische Farbteiler-Anordnung;

Fig. 2    eine graphische Darstellung der Spektralverläufe einer Farbteiler-Anordnung;

Fig. 3    die Filter-Kurven eines Kantenfilters für kurzwelliges Licht;

Fig. 4    die Filter-Kurven eines Kantenfilters für langwelliges Licht;

Fig. 5    eine resultierende Filter-Kurve; und

Fig. 6    ein zweites Ausführungsbeispiel für eine optische Farbteiler-Anordnung.

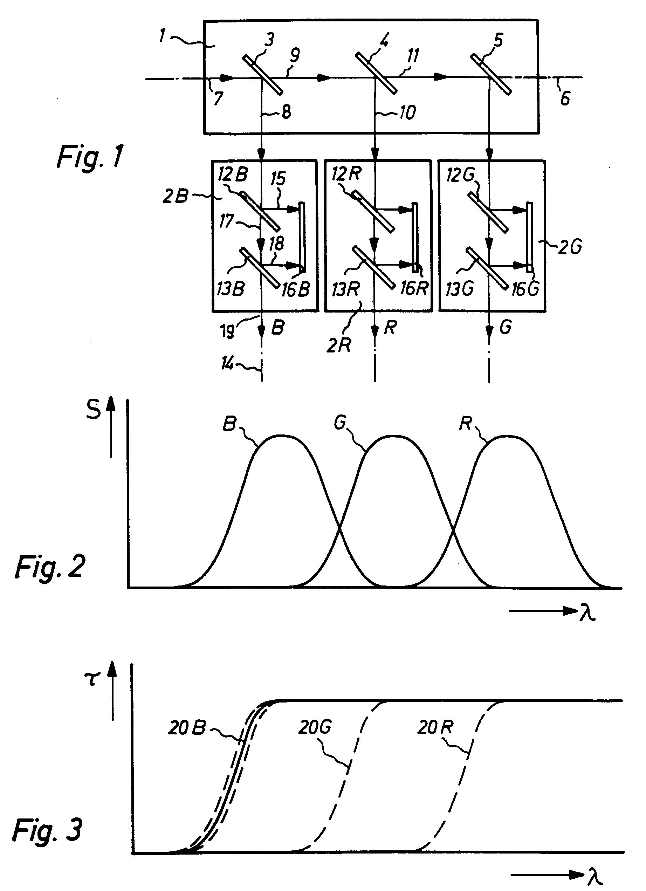

Fig. 1 zeigt ein erstes Ausführungsbeispiel für eine optische Farbteiler-Anordnung. Die optische Farbteiler-Anordnung besteht aus dem eigentlichen Farbteiler 1, mit dem Licht in mindestens zwei, im Ausführungsbeispiel in drei, Spektralbereiche "Blau" (B), "Rot" (R) und "Grün" (G) zerlegt wird und aus optischen Korretur-Vorrichtungen 2B, 2R und 2G zur Feinabstimmung der einzelnen Spektralbereiche.

Der Farbteiler 1 besteht aus dichroitischen Spiegeln 3 und 4 und einem Metallspiegel 5, die hintereinander auf der optischen Achse 6 eines in den Farbteiler 1 einfallenden Lichtbündels 7 angeordnet sind. Die Spiegelflächen der Spiegel 3, 4 und 5 sind gegenüber der optischen Achse 6 um einen Winkel, im Ausführungsbeispiel um 45°, gedreht.

Die dichroitischen Spiegel 3 und 4, auch Kantenfilter genannt, haben die Eigenschaft, den Lichtanteil eines definierten begrenzten Bereiches des Spektrums zu reflektieren bzw. zu sperren (geringer Transmissionsgrad) und den Lichtanteil des restlichen Bereiches des Spektrums durchzulassen (hoher Transmissionsgrad). Das spektrale Verhalten eines dichroitischen Spiegels wird durch die sogenannte Filter-Kurve beschrieben, die den Verlauf des Transmissionsgrades (τ) des dichroitischen Spiegels in Abhängigkeit von der Wellenlänge (λ) des einfallenden Lichtes widergibt, wobei die Flanke der Filter-Kurve, d. h. der Übergang von einem hohen zu einem niedrigen Transmissionsgrad bzw. umgekehrt, die Grenze zwischen dem spektralen Sperr- und Durchlaßbereich des dichroitischen Spiegels definiert.

Dichroitische Spiegel werden durch Bedampfen einer klaren Glasplatte mit lichtdurchlässigen mineralischen Subtanzen unterschiedlicher Brechungszahlen hergestellt, wobei die Schichtdicke im Bereich der Wellenlänge des Lichtes liegt. Die spektralabhängige Wirkung der Lichtreflektion wird durch Interferenz erreicht. Jeder dichroitische Spiegel ist durch die Wellenlänge, bei der die Flanke der Filter-Kurve liegt, und durch den Einfallswinkel für das Licht gekennzeichnet.
Aufbau und Wirkungsweise von solchen dichroitischen Spiegeln, die im Handel erhältlich sind, sind dem Fachmann bekannt. Zur näheren Information wird auf die Literatur, z. B. auf *"Bauelemente der Elektronik"*, Naumann & Schröder, München u. Wien, 1983, verwiesen.

Die spektrale Filter-Kurve des dichroitischen Spiegels 3 ist so gewählt, daß der Spiegel 3 von dem einfallenden Lichtbündel 7 nur den Lichtanteil des blauen Spektralbereiches als Teillichtbündel 8 in den Farbkanal "Blau" (B) reflektiert und den restlichen Lichtanteil als Teillichtbündel 9 zu dem dichroitischen Spiegel 4 durchläßt.

Die Filter-Kurve des dichroitischen Spiegels 4 ist dagegen so beschaffen, daß der dichroitische Spiegel 4 von dem Teillichtbündel 9 nur den Lichtanteil des roten Spektralbereiches als Teillichtbündel 10 in den Farbkanal "Rot" (R) reflektiert und den verbleibenden Lichtanteil des grünen Spektralbereiches als Teillichtbündel 11 durchläßt, der durch den Metallspiegel 5 in den Farbkanal "Grün" (G) umgeleitet wird.

Fig. 2 zeigt als grafische Darstellung die Spektralverläufe S = f(λ) der am Ausgang des Farbteilers 1 erscheinenden Farbanteile "Blau" (B), "Rot" (R) und "Grün" (G).

Die Korrektur-Vorrichtungen 2B, 2R und 2G in der Fig. 1 sind identisch aufgebaut, so daß im folgenden nur die Korrektur-Stufe 2B für den Farbkanal "Blau" beschrieben wird.
Die Korrektur-Vorrichtung 2B besteht aus zwei weiteren dichroitischen Spiegeln 12B und 13B, die auf der optischen Achse 14 des Teillichtbündels 8 hintereinander angeordnet sind. Jeder dichroitische Spiegel befindet sich in einer Normallage zur optischen Achse des Teillichtbündels 8, in der das Teillichtbündel 8 unter dem vorgegebenen Einfallswinkel auf die Spiegelfläche auftrifft. Im Ausführungsbeispiel liegen die Spiegelflächen parallel zueinander, und die Einfallswinkel betragen 45°. Die dichroitischen Spiegel 12B und 13B sind so ausgewählt, daß die Flanken der Filter-Kurven auf die Grenzen des Spektralbereichs des Farbkanals "Blau" innerhalb des Spektrums abgestimmt sind.

Der dichroitische Spiegel 12B wirkt optisch als kurzwelliger Kantenfilter, mit dem von dem Teillichtbündel 8 der kurzwellige Lichtanteil 15 an der unteren Grenze des durchgelassenen Spektralbereichs des Farbkanals "Blau" auf eine lichtabsorbierende Fläche 16 B (optischer Sumpf) reflek-tiert und unwirksam wird, während der restliche spektrale Lichtanteil 17 des Teillichtbündels 8 fast verlustfrei zu dem dichroitischen Spiegel 13 B durchgelassen wird.

Der dichroitische Spiegel 13 B wirkt dagegen optisch als langwelliger Kantenfilter, mit dem von dem restlichen spektralen Lichtanteil 17 der langwellige Lichtanteil 18 an der oberen Grenze des durchgelassenen Spektralbereiches des Farbkanals "Blau" auf die lichtabsorbierende Fläche 16B reflektiert und unwirksam wird, während der verbleibende Lichtanteil 19 fast verlustfrei durch den dichroitischen Spiegel 13B durchgelassen wird.

Der durch beide dichroitischen Spiegel 12B und 13B durchgetretene spektrale Lichtanteil 19 definiert den eingeengten Spektralbereich des Farbkanals "Blau".

Die dichroitischen Spiegel 12B und 13B der Korrekturvorrichtung 2B sind erfindungsgemäß um eine senkrecht zur Ebene der Teillichtbündel 8, 9 und 10 orientierte Achse durch nicht dargestellte mechanische Vorrichtungen in beide Richtungen um einige Grade, z. B. bis zu ± 6°, aus der Normallage drehbar. Durch die Drehung der dichroitischen Spiegel 12B und 13B lassen sich die Flanken der zugehörigen Filter-Kurven und damit die Grenzen zwischen spektralen Sperr- und Durchlaßbereichen innerhalb symmetrischer Abstimmbereiche verschieben.
Dadurch wird in vorteilhafter Weise ein feinfühliger Abgleich der spektralen Flanken und damit der Grenzen des durchgelassenen Spektralbereiches des Farbkanals "Blau" ermöglicht. Die spektralen Flanken der Filter-Kurven lassen sich durch die Verwendung von linear polarisiertem Licht noch verbessern.

Ebenso werden auch in den Korrektur-Vorrichtungen 2R und 2G die dichroitischen Spiegel 12R und 12G als kurzwellige Kantenfilter und die dichroitischen Spiegel 13R und 13G als langwellige Kantenfilter verwendet, deren Filter-Kurven jeweils auf die Lage der durchgelassenen Spektralbereiche der Farbkanäle "Rot" und "Grün" innerhalb des Spektrums abgestimmt sind.

Wie bereits für die Korrektur-Stufe 2B des Farbkanals "Blau" beschrieben, sind auch die dichroitischen Spiegel 12R, 12G, 13R und 13G in den Korrektur-Stufen 2R und 2G feinfühlig drehbar angeordnet, so daß sich die Farbselektivität des Farbteilers 1 individuell durch Einengung der Spektralbereiche, d. h. durch Anpassung der Flankensteilheiten der Filter-Kurven auf die voneinander zu trennenden Spektralbereiche des einfallenden Lichts, genau und feinfühlig abstimmen läßt.

Fig. 3 zeigt die Filter-Kurven 20B, 20R und 20G der dichroitischen Spiegel 12B, 12R und 12G bzw. der kurzwelligen Kantenfilter, wobei die Flanken der Filter-Kurven 20B, 20R und 20G jeweils im Bereich der unteren Grenzen der durchgelassenen Spektralbereiche der Farbkanäle "Blau", "Rot" und "Grün" liegen.

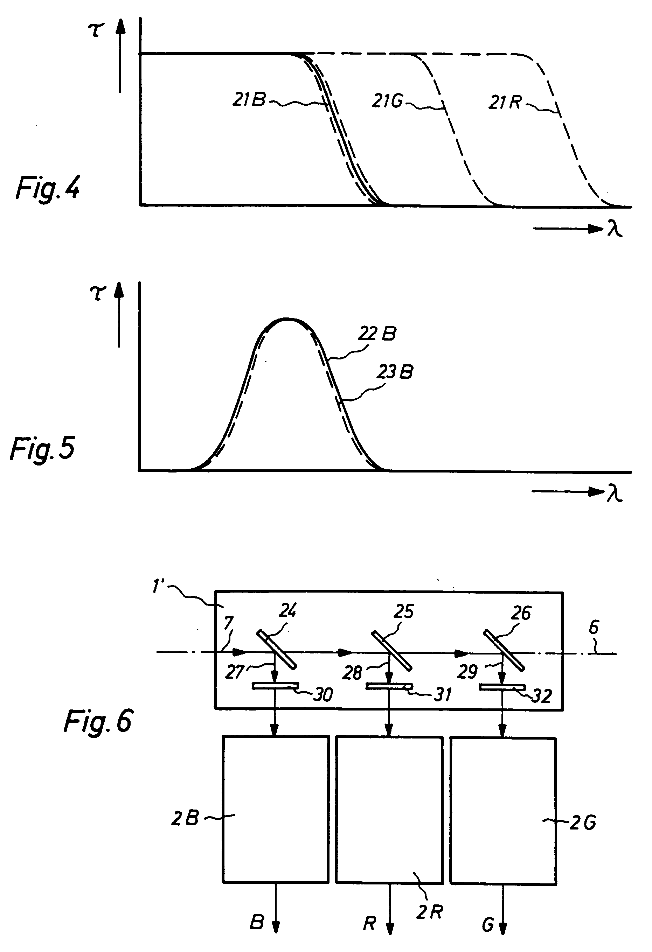

Fig. 4 zeigt die entsprechenden Filter-Kurven 21B, 21R und 21G der dichroitischen Spiegel 13B, 13R und 13G bzw. der langwelligen Kantenfilter, wobei die Flanken der Filter-Kurven 21B, 21R und 21G in diesem Falle jeweils im Bereich der oberen Grenzen der durchgelassenen Spektralbereiche der Farbkanäle "Blau", "Rot" und "Grün" liegen.

Die Verschiebung der Flanken der Filter-Kurven durch eine Drehung der dichroitischen Spiegel ist in den Fig. 3 und 4 für die Filterkurven 20B und 21B gestrichelt angedeutet.

Die Wirkungsweise der erfindungsgemäßen Korrektur-Schaltungen 2B, 2R und 2G für den Farbteiler 1 soll am Beispiel des Farbkanals "Blau" verdeutlicht werden.

Fig. 5 zeigt die Filter-Kurve 22B für das Licht des blauen Spektralanteiles am Eingang der Korrektur-Stufe 2B und die mittels der erfindungsgemäßen Korrektur-Stufe 2B gewonnene resultierende Filter-Kurve 23B am Ausgang der Korrektur-Stufe 2B.

Der Vergleich der beiden Filter-Kurven 22B und 23B zeigt, daß mittels der Korrektur-Vorrichtung 2B der blaue Spektralbereich durch Verschiebung der Flanken eingeengt bzw. genauer definiert und damit die Farbselektivität des Farbkanals "Blau" erhöht wurde.

Durch Verwendung der erfindungsgemäßen Korrektur-Vorrichtungen mit drehbar gelagerten dichroitischen Spiegeln läßt sich diese Korrekturwirkung gegenüber herkömmlichen Korrekturen in vorteilhafter Weise nahezu ohne Verluste, in kurzer Zeit und mit geringem technischen Aufwand und dennoch genau und reproduzierbar durch die Möglichkeit einer Feinabstimmung erreichen.

Fig. 6 zeigt ein zweites Ausführungsbeispiel für eine Farbteiler-Anordnung, das sich von dem ersten Ausführungsbeispiel nach Fig. 1 durch einen anderen Aufbau des Farbteilers 1 unterscheidet. Der modifizierte Farbteiler 1' nach Fig. 6, ebenfalls für die Zerlegung des Lichtes in drei Farbanteile "Blau", "Rot" und "Grün" ausgelegt, besteht aus zwei halbdurchlässigen Spiegeln 24 und 25 und einem Metallspiegel 26, die ebenfalls hintereinander auf der optischen Achse 6 angeordnet sind. Mit Hilfe dieser Spiegel 24, 25 und 26 wird das einfallende Lichtbündel 7 lediglich in drei Teillichtstrahlen 27, 28 und 29 aufgeteilt. Für die anschließende spektrale Zerlegung der drei Teillichtstrahlen 27, 28 und 29 sind in den Teilstrahlen Farbfilter bzw. Interferenzfilter 30, 31 und 32 angeordnet.

**Patentansprüche**

1. Optische Farbteiler-Anordnung, bestehend aus einem Farbteiler zur spektralen Zerlegung eines Lichtbündels in mindestens zwei farbige Lichtbündel unterschiedlicher Spektralbereiche und aus einer in jedem der farbigen Lichtbündel angeordneten Korrektur-Vorrichtung zur Verbesserung der Farbselektivität des Farbteilers, dadurch gekennzeichnet, daß

   a) die Korrektur-Vorrichtung (2B, 2R; 2G) für jeweils ein farbiges Lichtbündel aus zwei auf der optischen Achse des farbigen Lichtbündels hintereinander angeordneten dichroitischen Spiegeln (12B; 13B, 12R; 13R; 12G; 13G) besteht, wobei jeder dichroitische Spiegel in einer Normallage zur optischen Achse angeordnet ist, die durch den für den betreffenden dichroitischen Spiegel vorgegebenen Einfallswinkel festgelegt ist, und

   b) die spektralen Filter-Kurven der dichroitischen Spiegel jeder Korrektur-Vorrichtung so ausgewählt sind, daß der eine der beiden dichroitischen Spiegel den kurzwelligen Lichtanteil und der andere dichroitische Spiegel den langwelligen Lichtanteil des Spektralbereiches des betreffenden farbigen Lichtbündels reflektiert, so daß der durch die Korrektur-Vorrichtung (2B, 2R; 2G) durchgelassene Lichtanteil ein Lichtbündel mit einem eingeengten Spektralbereich bildet.

2. Optische Farbteiler-Anordnung nach Anspruch 1, dadurch gekennzeichnet, daß jeder dichroitische Spiegel aus seiner Normallage drehbar ist, um durch Verschieben der Flanken der Filterkurven eine spektrale Abstimmung zu erreichen.

3. Optische Farbteiler-Anordnung nach Anspruch 1 oder 2, dadurch gekennzeichnet, daß die Normallagen der dichroitischen Spiegel (12B; 13B, 12R; 13R; 12G; 13G) zu den optischen Achsen der farbigen Lichtbündel 45° betragen.

4. Optische Farbteiler-Anordnung nach einem der Ansprüche 1 bis 3, dadurch gekennzeichnet, daß die dichroitischen Spiegel (12B; 13B, 12R; 13R; 12G; 13G) auf den optischen Achsen der farbigen Lichtbündel in ihrer Normallage parallel zueinander angeordnet sind.

**5.** Optische Farbteiler-Anordnung nach einem der Ansprüche 1 bis 4, <u>gekennzeichnet durch</u> lichtabsorbierende Flächen (16B, 16R; 16G), auf die die von den dichroitischen Spiegeln (12B; 13B, 12R; 13R; 12G; 13G) nicht durchgelassenen Lichtanteile geleitet werden.

**6.** Optische Farbteiler-Anordnung nach einem der Ansprüche 1 bis 5, <u>dadurch gekennzeichnet,</u> daß der Farbteiler aus mindestens einem teildurchlässigen Spiegel zur Zerlegung des Lichtbündels in Teillichtbündel und aus in den Teillichtbündeln angeordneten Spektralfiltern besteht.

**7.** Optische Farbteiler-Anordnung nach einem der Ansprüche 1 bis 5, <u>dadurch gekennzeichnet,</u> daß der Farbteiler aus mindestens einem dichroitischen Spiegel besteht.

**Claims**

**1.** An optical colour separator arrangement, consisting of a colour separator for the spectral decomposition of a light beam into at least two coloured light beams of differing spectral ranges and of a correction device arranged in each of the coloured light beams to improve the colour selectivity of the colour separator, characterised in that
a) the correction device (2B, 2R; 2G) for in each case one coloured light beam consists of two dichroic mirrors (12B; 13B, 12R; 13R; 12G; 13G) arranged one behind the other on the optical axis of the coloured light beam, in which each dichroic mirror is arranged in a normal position to the optical axis, which is established by the angle of incidence given for the respective dichroic mirror, and
b) the spectral filter curves of the dichroic mirrors of each correction device are selected such that one of the two dichroic mirrors reflects the short wave light component and the other dichroic mirror reflects the long wave light component of the spectral range of the respective coloured light beam, so that the light component transmitted by the correction device (2B,2R;2G) forms a light beam with a restricted spectral range.

**2.** An optical colour separator arrangement according to Claim 1, characterised in that each dichroic mirror is rotatable from its normal position, in order to reach a spectral coordination through displacement of the slopes of the filter curves.

**3.** An optical colour separator arrangement according to Claim 1 or 2, characterised in that the normal positions of the dichroic mirrors (12B; 13B, 12R; 13R; 12G; 13G) to the optical axes of the coloured light beams amount to 45°.

**4.** An optical colour separator arrangement according to one of Claims 1 to 3, characterised in that the dichroic mirrors (12B; 13B,12R; 13R; 12G; 13G) are arranged parallel to each other on the optical axes of the coloured light beams in their normal position.

**5.** An optical colour separator arrangement according to one of Claims 1 to 4, characterised by light-absorbing faces (16B,16R; 16G), onto which the light components are directed which are not transmitted by the dichroic mirrors (12B; 13B,12R; 13R; 12G; 13G).

**6.** An optical colour separator arrangement according to one of Claims 1 to 5, characterised in that the colour separator consists of at least one partially penetrable mirror for the decomposition of the light beam into partial light beams and of spectral filters arranged in the partial light beams.

**7.** An optical colour separator arrangement according to one of Claims 1 to 5, characterised in that the colour separator consists of at least one dichroic mirror.

**Revendications**

**1.** Montage diviseur de couleur, optique, composé d'un diviseur de couleur pour la décomposition spectrale d'un faisceau lumineux en au moins deux faisceaux lumineux de couleur correspondant à des plages spectrales différentes et d'un dispositif de correction placé dans chaque faisceau lumineux de couleur pour améliorer la sélectivité de couleur du diviseur de couleur, caractérisé en ce que :
a) le dispositif de correction (2B, 2R ; 2G) pour chaque faisceau lumineux de couleur se compose de deux miroirs dichroïques (12B ; 13B, 12R ; 13R ; 12G ; 13G) placés l'un derrière l'autre sur l'axe optique du faisceau lumineux de couleur, chaque miroir dichroïque étant placé dans une position normale par rapport à l'axe optique défini par l'angle d'incidence prédéterminé pour le miroir dichroïque concerné et

b) les courbes spectrales de filtres des miroirs dichroïques pour chaque dispositif de correction sont choisies pour que l'un des deux miroirs dichroïques réfléchisse la partie de lumière de courte longueur d'onde et l'autre miroir dichroïque réfléchisse la partie de lumière de grande longueur d'onde de la plage spectrale du faisceau lumineux de couleur, concerné, pour que la partie de lumière ayant traversé le dispositif de correction (2B, 2R ; 2G) forme un faisceau lumineux ayant une plage spectrale rétrécie.

2. Montage diviseur de couleur selon la revendication 1, caractérisé en ce que chaque miroir dichroïque peut tourner à partir de sa position normale pour réaliser un accord spectral sur les courbes de filtres par déplacement des flancs.

3. Montage diviseur de couleur selon la revendication 1 ou 2, caractérisé en ce que les positions normales des miroirs dichroïques (12B ; 13B, 12R ; 13R ; 12G ; 13G) par rapport à l'axe optique des faisceaux lumineux de couleur sont égales à 45°.

4. Montage diviseur de couleur selon l'une des revendications 1 à 3, caractérisé en ce que les miroirs dichroïques (12B ; 13B, 12R ; 13R ; 12G ; 13G) sont parallèles entre-eux dans leur position normale sur les axes optiques des faisceaux lumineux de couleur.

5. Montage diviseur de couleur selon l'une des revendications 1 à 4, caractérisé par des surfaces absorbant la lumière (16B, 16R ; 16G) recevant les parties de lumière n'ayant pas traversé les miroirs dichroïques (12B ; 13B, 12R ; 13R ; 12G ; 13G).

6. Montage diviseur de couleur selon l'une des revendications 1 à 5, caractérisé en ce que le diviseur de couleur se compose d'au moins un miroir semi-transparent pour décomposer le faisceau lumineux en des faisceaux lumineux partiels et comprend des filtres spectraux placés dans les faisceaux lumineux partiels.

7. Montage diviseur de couleur selon l'une des revendications 1 à 5, caractérisé en ce que le diviseur de couleur se compose d'au moins un miroir dichroïque.

Fig. 1

Fig. 2

Fig. 3

*Fig.4*

21B

21G

21R

*Fig.5*

22B

23B

*Fig.6*

1'

7

24

25

26

6

27

28

29

30

31

32

2B

2R

2G

B

R

G